# EUROPEAN PATENT SPECIFICATION

(11) **EP 3 317 977 B1**
(45) Date of publication and mention of the grant of the patent: **11.09.2019**
(21) Application number: 16827163.3
(22) Date of filing: 06.07.2016
(51) Int. Cl.: H04B 7/04, H04B 7/06, H04B 7/08, H04W 52/14, H04W 52/48, H04W 72/04

(54) **BEAM DETECTION AND TRACKING IN WIRELESS NETWORKS**
STRAHLENDETEKTION UND -VERFOLGUNG IN DRAHTLOSEN NETZWERKEN
DÉTECTION ET POURSUITE DE FAISCEAU DANS DES RÉSEAUX SANS FIL

(30) Priority: 23.07.2015 US 201514807613
(43) Date of publication of application: 09.05.2018
(73) Proprietor: Huawei Technologies Co., Ltd., Longgang District Shenzhen, Guangdong 518129 (CN)
(72) Inventor: LIU, Bin, Shenzhen, Guangdong 518129 (CN); STIRLING-GALLACHER, Richard, Shenzhen, Guangdong 518129 (CN)
(74) Representative: Gill Jennings & Every LLP
(86) International application number: PCT/CN2016/088915
(87) International publication number: WO 2017/012472

(56) References cited:
- EP-A2- 2 076 087
- WO-A2-2014/172306
- CN-A- 102 638 878
- CN-A- 102 981 151
- CN-A- 103 620 976

## Description

### TECHNICAL FIELD

Embodiments described herein generally relate to wireless networks. Some embodiments relate generally to beam detection in millimeter wave wireless networks.

### BACKGROUND

Growing use of wireless systems for both data and voice communications has created a need for additional wireless bandwidth. This may be achieved through spectral efficiency in currently used frequency bands or additional bandwidth.

Higher frequency bands are being used to add additional capacity in wireless communication systems. For example, millimeter wave (mmWave) wireless communications may provide high data rates (e.g., gigabits per second) with largely available bandwidth. Due to severe path loss in mmWave communication, beamforming is typically used. Transmitter and/or receiver are equipped with large scale of antenna array to form narrow beams with high beam forming gain. On the other hand, the highly directional characteristic of mmWave communication is ideally suited to cellular communications, particularly in crowded urban environments. The mmWave systems form narrow beam with antenna array that enable an increased density of communication devices without causing interference. Since a greater number of highly directional antennas can be placed in a given area, the net result is greater reuse of the spectrum.

In document EP 2 076 087 A2 (FUJITSU LTD [JP]) 1 July 2009 (2009-07-01), first, as depicted in Fig. 14, in the UE 40, after power activation or the like, when the SCH cyclically transmitted by the BS 10 is received by the receiving antenna 41, the RF receiver 42, the first separator 43, the second separator 45, the P-SCH reception processor 46A, and the S-SCH reception processor 46B (process 1010), the received power of each of the beams A and B is detected in the received power detectors 47A and 47B, respectively (process 1020). Then, the UE 40 compares each RACH access slot number corresponding to the selected beam in the access slot selector 49 with reference to the slot data for the individual beams in Table 1 or 2 in the memory 491 (process 1040), and selects one RACH access slot number out of the group (process 1050). The number of the selected RACH access slot is notified to the RACH transmitter 51, and the RACH transmitter 51 transmits the RACH preamble to the BS 10 through the RF transmitter 52 and the transmitting antenna 53 in the RACH access slot (process 1060).

### SUMMARY

While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

### BRIEF DESCRIPTION OF THE DRAWINGS

FIG. 1 illustrates a diagram of a wireless communication system, in accordance with various embodiments.
FIG. 2 illustrates a diagram of the wireless communication system with the user equipment (UE) receiving cell specific parameters, in accordance with various embodiments.
FIG. 3 illustrates a diagram of the wireless communication system with the UE detecting a base station beam, in accordance with various embodiments.
FIG. 4 illustrates a diagram of the wireless communication system with the UE performing contention-based random access with the base station, in accordance with various embodiments.
FIG. 5 illustrates a diagram of the wireless communication system with beam tracking between the UE and the base station, in accordance with various embodiments.
FIG. 6 illustrates a flowchart of a method for beam detection and tracking by a UE in a wireless network, in accordance with various embodiments.
FIG. 7 illustrates a flowchart of a method for beam detection and tracking in a base station in a wireless network, in accordance with various embodiments.
FIG. 8 is a block diagram illustrating a communication apparatus, in accordance with various embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

Various embodiments are described related to establishing and tracking beamformed signals between a base station and UE. The UE may select one or more of a plurality of beams transmitted from the base station based on the reference signal conveyed in the beams and retrieve corresponding time offset information contained in the beam. This time offset is either associated with the reference signal or specifically delivered in the beam. The UE may then transmit a random access preamble sequence to the base station at the time slot designated by the time offset information. The UE and base station may track the beam by the UE periodically detecting and measuring the quality of the downlink beams. The detection and tracking may be accomplished without beam training or blind detection of beams, which traditionally consume significant processing resources.

Beam detection may be defined as both the base station and the UE sweeping their respective beams through all possible directions in order to find the optimum direction having the highest signal-to-noise ratio. Since the beam width for a mmWave communication device may be as low as approximately 1°, the operation is non-trivial. Blind detection may be defined as beam detection conducted as an exhaustive search without coordination between the base station and the UE.

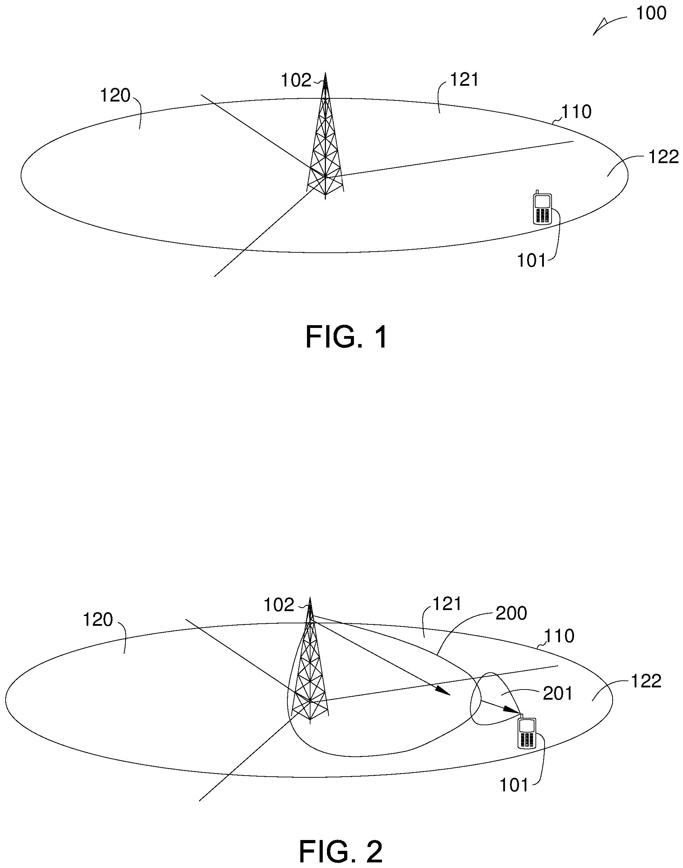

FIG. 1 illustrates a diagram of a wireless communication system 100, in accordance with various embodiments. For example, the wireless communication system 100 may be a cellular system that enables a wireless communication device 101 to communicate with one or more base stations 102 (e.g., evolved Node B (eNB)) over one or more wireless channels using a wireless communication technique (e.g., mmWave, time division duplex (TDD), frequency division duplex (FDD)).

The wireless communication device 101 may be a non-stationary device. For example, the wireless communication device 101 may include mobile radiotelephones, tablet computers, lap top computers, and other devices that may communicate with the base station 102. For consistency and simplicity, the wireless communication devices 101 are subsequently referred to as user equipment (UE). The UE includes a transceiver and control circuitry coupled to a plurality of antenna elements through which beamforming may be accomplished.

The base station 102 may include a plurality of antennas coupled to a transceiver as well as control circuitry to control the base station operation. FIG. 1 and subsequent figures show only a single antenna for purposes of simplicity and clarity. However, a person of ordinary skill in the art would realize that, for beamforming to be accomplished, the base station 102 comprises a plurality of antenna elements.

The base station 102 has a fixed location and may be part of a stationary base station network that is coupled to a larger network. For example, the base station 102 may be part of a wired network that is coupled to the Internet. The UE 101 may then access the larger network by communicating over the wireless communication channels with the base station 102.

The base station 102 communicates over an area 110 substantially surrounding the base station antenna. This area 110 is typically referred to as a cell 110 and may comprise one or more sectors 120, 121, 122. While three different sectors 120, 121, 122 are shown making up the cell 110 of FIG. 1, other embodiments may comprise different sector quantities.

In the following embodiments, the base stations are disclosed as operating in the mmWave band (e.g., 30-300 GHz). However, the present embodiments are not limited to any one frequency or frequency band or any one wireless communication technique (e.g., time division duplex (TDD), frequency division duplex (FDD)).

Some of the characteristics of mmWave communications include the short wavelength/high frequency, large bandwidth, high interaction with atmospheric constituents, relatively short transmission distances, and high attenuation through most solid objects. The high attenuation characteristic of mmWave and other similar wavelength transmissions may be compensated for by the use of highly directional antennas (e.g., beamforming) in both the UE and the base station.

Beamforming in a mmWave system uses the multiple antenna elements of both the UE and the base station to communicate over a narrow beam with high antenna gain between the two transceivers. For example, the eNB may have on the order of hundreds of antenna elements, on a radio chip, that are used in beamforming to communicate with a grouped quantity of antenna elements at the base station.

One problem with using beamforming in a mmWave system is that, before establishing communication between the UE and the base station, a beam direction should be identified on both the UE and base station sides. Conventionally, beam detection is conducted blindly on both the base station and the UE sides, resulting in a large amount of processing overhead to detect the right beam. The subsequently described embodiments provide reduced time and signaling overhead, compared to conventional beam detection and tracking. The detection and tracking of the beam may be performed without knowledge of UE location information and without macro eNB coordination.

FIG. 2 illustrates a diagram of the wireless communication system with the UE 101 receiving cell specific parameters, in accordance with various embodiments. The base station 102 is transmitting the broadcast channel (BCCH) over a wide beam 200. The wide beam 200 may cover an entire cell 110 or one or more sectors 120, 121, 122 of the cell 110. The BCCH detected by the UE is illustrated as signal 201.

The wide beam transmission of the BCCH may provide easier detection by the UE 101. Signal attenuation (i.e. path loss) resulting from transmission of a mmWave signal over a wide beam may be compensated for by increased transmission power by the base station 102 or a higher spreading gain of the transmitted signal.

The base station 102 broadcasts cell specific parameters, such as a reference signal configuration and random access preamble information (as defined in 3^{rd} Generation Partnership Project (3GPP)/Long Term Evolution (LTE) standard), in the BCCH. For example, the BCCH may comprise cell specific parameters, such as information regarding other UEs in the cell, downlink system bandwidth, system frame number, physical hybrid-ARQ indicator channel (PHICH) size, antenna configuration, and reference signal power. The BCCH also includes a plurality of random access preamble sequences as part of the random access preamble information.

During this step, the UE 101 detects the BCCH 201 and retrieves the reference information and random access preamble sequence information from the detected BCCH 201. At this point, the UE may also decide which set of receive beams in UE 101 have strongest signal strength and use this particular beam set for beam detection during the subsequent step.

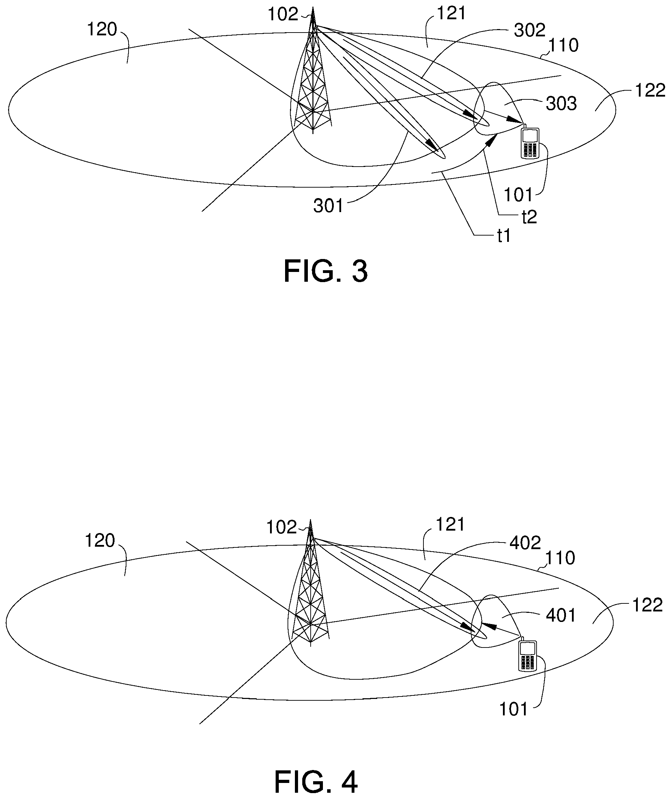

FIG. 3 illustrates a diagram of the wireless communication system with the UE 101 detecting a base station beam, in accordance with various embodiments. Base station 102 is shown as transmitting a plurality of downlink beamformed reference signals 301, 302 sequentially at particular times and a detected reference signal 303 as received by the UE 101. The UE 101 may have knowledge of a set of reference signals. The reference signals may be encoded by an orthogonal sequence (e.g., Zadoff-Chu) using a predetermined time and frequency resource.

For example, a first beamformed reference signal 301 may be transmitted by the base station 102 at time t₁ and a second beamformed reference signal 302 may be transmitted by the base station at time t₂. The base station 102 may be operating in the TDD mode at this time. Each beamformed reference signal 301, 302 covers a different angular region of the cell 110 or particular sector 122. The beamformed reference signals 301, 302 may comprise channel state information - reference signals (CSI-RS).

Each base station 102 may be assigned a plurality of specific CSI-RSs 301, 302 that are identified only with that particular cell 110. Each reference signal 301, 302 is transmitted in a different direction and includes reference signal associated time offset information on its respective beam that indicates the time when the base station 102 is going to monitor that respective direction for a possible UE random access operation. In other words, each reference signal may have different time offset information associated with that particular reference signal.

The time offset information may include a particular time unit from a reference time known by both the UE 101 and the base station 102. For example, the time offset may be a particular frame number or sub-frame number that is known to both the UE 101 and the base station 102.

In another embodiment, the base station 102 may transmit a plurality of time offsets to the UE 101 to enable the UE 101 to select its own particular time offset for that respective direction. The base station 102 is thus informing the UE 101 that the base station 102 is going to monitor the respective direction of the reference signal 301, 302 containing the set of time offsets at each of those particular times. However, the UE 101 transmits only at its one selected time offset.

If the time offset is the same for all of the beams 301, 302 or has a fixed pattern for all of the beams 301, 302 in the cell 110 or a particular sector, the time offset may be broadcast on the BCCH instead of being indicated in each beam.

The time offset can also be embedded in a reference sequence index. Since the base station 102 may broadcast multiple reference signals and each reference signal is beamformed and broadcast in one beam direction, each reference signal is identified by a unique reference sequence index. Thus, the UE 101 may identify each particular reference signal 301, 302 by its respective reference sequence index. The mapping between the time offset and the respective reference sequence index is known by the UE 101 from the message broadcasted by the base station 102. The reference signal may be unique for each cell generated by a base station or for each sector within a cell. The reference signal may also be unique for each beam in a particular cell or sector.

Assuming that the base station forms N narrow beams to cover a whole cell 110 or any particular sector 120, 121, 122, the reference signal may be generated using either analog domain beamforming or digital domain beamforming. In the analog domain, the reference signal may be time division multiplexed by using time slots to transmit different beams, if the base station is equipped with only one antenna array. Multiple reference signals can be beamformed in different beam directions if the base station is equipped with multiple antenna arrays. In the latter case, less time is needed to transmit all of the reference signals. If digital beamforming is enabled in the base station, the reference signal may be frequency division multiplexed using different sub-carriers or resource blocks. Each reference signal is precoded with orthogonal beamforming vector, which is corresponding to different beam directions.

In the case of analog beamforming in eNB transmissions, the UE 101 detects the reference signal from different beams for L continuous time slots, where L is equal to or less than N, which depends on how many beams the eNB can form simultaneously in downlink. Furthermore, if the UE can form M beams, it will take *L* ∗ *M* time slots for the UE 101 to complete one cycle of detection, unless the UE 101 has multiple receiver chains. The *L* parameter may be obtained from the base station 102 via the BCCH.

In the case of digital beamforming in eNB transmissions, the UE 101 detects the reference signal on N different resource blocks, where a different precoding matrix is applied for each resource block. The time offset embedded in each resource block for different beams could be different.

Once the UE 101 has detected the best reference signal from the received reference signals, it decodes the corresponding time offset information. In one embodiment, the UE 101 conducts this beam detection periodically in either an idle mode or a connected mode. The UE 101 may also monitor the downlink beam quality during the idle mode or connected mode. In an embodiment, the quality of the beams may be defined as one or more of a measured signal-to-noise ratio (SNR) of the beam or a received power level of the beam.

There may be multiple ways that the UE 101 determines the highest quality reference signal. For example, the UE 101 may compare all of the received reference signals and select the highest quality signal. In another example, the UE 101 may have a received power threshold or SNR threshold and select the first received reference signal that exceeds one or more of those thresholds.

FIG. 4 illustrates a diagram of the wireless communication system with the UE 101 performing contention-based random access with the base station 102, in accordance with various embodiments. Since there may be many other UEs in the same cell attempting to transmit the same request, there may be a possibility of a collision among the requests coming from various other UEs. Some enhancement in this contention-based random access procedure may reduce or prevent such collisions.

The UE 101 transmits the random access preamble sequence 401, selected previously from the preamble sequence set, in the time slot that was also selected previously (corresponding to the best reference signal or from the set of time slots of a particular reference signal). As previously discussed, the base station 102 is monitoring that time slot for that particular beam 402 selected by the UE 101. Once the base station 102 detects the preamble sequence, the base station 102 transmits a random access response (RAR) to the transmitting UE 101 in the same beam direction. The base station 102 then monitors this beam 402 for additional transmissions from the UE 101.

In order to reduce the possibility of a collision in the cell 110, the UE may choose its preamble sequence from a relatively large set of preamble sequences associated with a particular beam 402. Also, if multiple time offsets are associated with a particular downlink beam, the UE 101 may randomly select one time offset to send the preamble sequence. The base station 102 may also instruct the UE 101 to back off for a period of time before retrying the random access attempt.

The UE's 101 initial transmit power for transmitting the preamble sequence to the base station 102 may be based on an open-loop transmit power estimation that does not use feedback from the base station. The open-loop power control initially sets the UE transmit power using measurements obtained from signals sent by the base station. The initial transmission power may be adjusted for path-loss in the designated beam 402.

In an embodiment where the random access procedure fails (e.g., no feedback from the base station 102) and the UE 101 has detected the same downlink beam again for the random access procedure or multiple receive time slots are indicated in the reference signal, the UE 101 may increase its transmit power by a preset power level (e.g., as indicated by the BCCH) and attempt the random access procedure again. The power increase and attempted random access procedure may be repeated numerous times until the UE 101 is either successful or a threshold of attempts has been reached.

In another embodiment where the random access procedure fails and the UE 101 detects a different downlink beam, the UE 101 may still use the initial power setting, as indicated previously, and attempt to send the random access preamble sequence again. If this reattempt fails as well, the UE 101 may increase its transmit power by the preset amount and repeat the attempt until either successful or the threshold of attempts has been reached.

The base station 102 may have the ability to substantially simultaneously monitor N narrow beams that cover an entire cell 110 or an entire sector 120, 121, 122 of the cell 110. In such an embodiment, the base station 102 may set the time offsets to an invalid indication (e.g., -1). When the UE 101 detects an invalid time offset, the UE 101 may start the random access procedure at any time. In such an embodiment, the base station 102 identifies the beam/beams to be used to communicate with that particular UE 101.

If the base station 102 has the ability to form multiple narrow beams in a cell 110 or particular sector 120, 121, 122 (in both transmit and receive) but cannot cover an entire cell 110 or sector 120, 121, 122, the base station 102 may form substantially simultaneous receive beams spatially separated (i.e., not adjacent to each other). This enables more UEs to access the base station 102 and reduces the contention possibilities. In such an embodiment, the UE 101 still follows the above-described random access procedure (i.e. selected preamble sequence transmitted on detected downlink beam at specified time offset).

Once communication between the UE 101 and the base station 102 has been set up on the detected beam, as discussed previously, the beams may be tracked by the UE as it moves about the cell 110 or to different cells. The UE 101 may leave the area of one beam (i.e. serving beam) and move to another beam (i.e. target beam). This movement may be tracked and the beam used for communication between the UE 101 and the base station 102 changed.

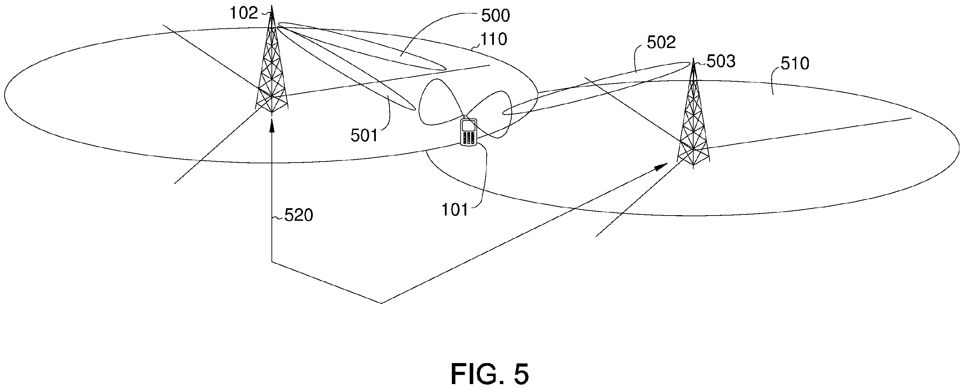

FIG. 5 illustrates a diagram of the wireless communication system with beam tracking between the UE 101 and the base station 102, in accordance with various embodiments. The UE 101 monitors the downlink beams periodically, during both the connected mode and the idle mode, by detecting the reference signal in different beams from the base station 102. As the UE 101 moves, the signal quality of its serving beam 500 may degrade. Once the UE 101 identifies a high quality beam 501, 502 (e.g., through SNR or received power), the detection process may be somewhat different depending on if the target beam 501 is in the same cell 110 as the serving beam 500 or the target beam 502 is in a neighboring cell 510.

If the target beam 501 is located in the same cell 110 as the serving beam 500, the UE 101 may send the beam information to the base station 102 through the serving beam 500, if the serving beam quality is still good enough for communication, or through the newly detected target beam 501 if the serving beam quality is too low for reliable communication (e.g., as determined by SNR and/or received signal power). The beam information may include the reference signal index of the target beam 501, the time offset detected from the target beam reference signal, or both the reference signal index and the time offset. In the latter case, the information is delivered by following a random access procedure since the base station does not know that the UE 101 sends information to the base station in the beam 501.

If the target beam 501 aligns the same UE receive beam as the serving beam 500, the base station 102 may simply switch to the target beam 501 to communicate with the UE 101 or send downlink data in both beams 500, 501 to take advantage of the spatial diversity. In the latter case, the base station 102 and/or the UE 101 may still monitor the signal quality of all the beams and drop the lowest quality beam. The UE 101 and the base station 102 go through a substantially similar process as discussed previously in setting up the new, target beam 501 as the serving beam.

If the target beam 502 is located in the neighboring cell 510, the UE requests handover to the target base station 503 through the serving base station 102. A network connection 520 between the target base station 503 and the serving base station 102 may be used for communication between the two base stations 102, 503 in transferring the UE 101 to the target base station 503. For example, the serving base station 102 may transfer any known information regarding the UE 101 to the target base station 503. The UE 101 and the target base station 503 go through a substantially similar process as discussed previously in setting up the new, target beam 502 as the serving beam.

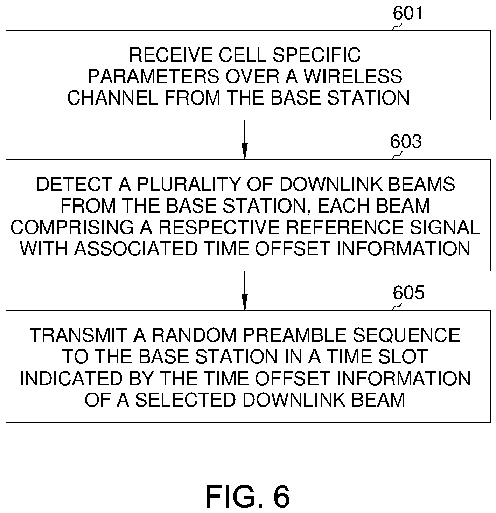

FIG. 6 illustrates a flowchart of a method for beam detection and tracking by a UE in a wireless network, in accordance with various embodiments. In block 601, cell specific parameters are received over a wireless channel from a base station (e.g., eNB). The cell specific parameters may be transmitted over a mmWave, wide beam broadcast channel and include a plurality of random access preamble sequence information.

In block 603, a plurality of downlink beams are detected from the base station. Each downlink beam comprises a respective reference signal comprising associated time offset information.

In block 605, a random access preamble sequence is transmitted to the base station in a time slot indicated by the time offset information of a selected downlink beam of the plurality of downlink beams. The selected downlink beam is selected based on its signal quality as described previously.

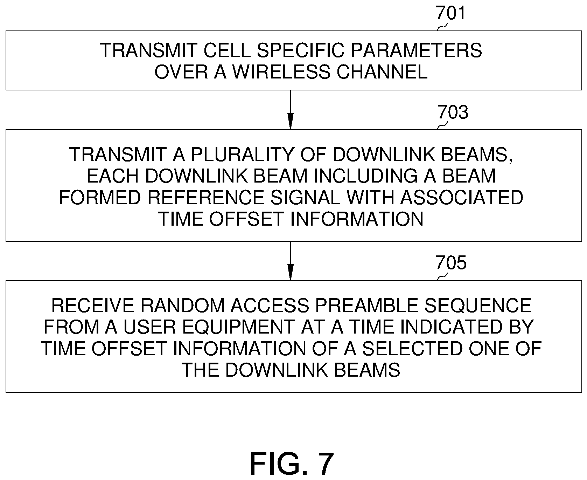

FIG. 7 illustrates a flowchart of a method for beam detection and tracking in a base station in a wireless network, in accordance with various embodiments. In block 701, cell specific parameters are transmitted over a wireless channel to UE.

In block 703, a plurality of downlink beams are transmitted. Each downlink beam includes a beamformed reference signal with associated time offset information. Each downlink beam may further include a plurality of associated time offsets transmitted with each downlink beam. In block 705, a random access preamble sequence is received from user equipment at a time indicated by time offset information of a selected one of the downlink beams.

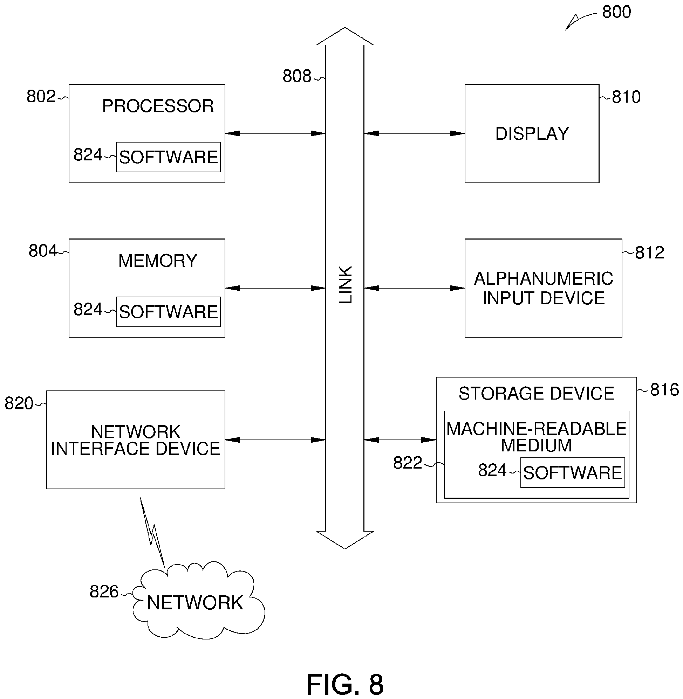

FIG. 8 is a block diagram illustrating a wireless communication apparatus, in accordance with various embodiments. The communication apparatus 800 may be in the example form of a UE, a cellular base station (e.g., eNodeB, eNB), an access point (AP), or some other wireless station. For example, the communication apparatus 800 may be a computer, a personal computer (PC), a tablet PC, a hybrid tablet, a personal digital assistant (PDA), or part of any device configured to execute instructions (sequential or otherwise) that specify actions to be taken by the communication apparatus 800.

The term "processor-based system" shall be taken to include any set of one or more communication apparatuses that are controlled by or operated by processing circuitry (e.g., a controller) to individually or jointly execute instructions to perform any one or more of the methodologies discussed herein. A set or sequence of instructions may be executed to cause the communication apparatus to perform any one of the methodologies discussed herein, according to an example embodiment.

The communication apparatus 800 may include at least one controller 802 (e.g., a central processing unit (CPU), a graphics processing unit (GPU) or both, processor cores, compute nodes, etc.), and memory 804 that communicate with each other via a link 808 (e.g., bus). If the communication apparatus 800 is a UE, it may further include a display device 810 (e.g., video, LED, LCD) and an alphanumeric input device 812 (e.g., a keypad, keyboard). In one embodiment, the display device 810 and the input device 812 may be incorporated as one unit as a touch screen display.

The communication apparatus 800 may additionally include a mass storage device 816 (e.g., a drive unit, hard disk drive, solid state drive, optical drive) and a network interface device 820. The network interface device 820 may include one or more radios (e.g., transmitters and receivers (transceivers)) coupled to a plurality of antenna elements in order to communicate over a wireless network channel 826, as illustrated in FIG. 1. The one or more radios may be configured to operate using one or more communication techniques including the beam detection and tacking method discloses herein. The combination of the controller with the radios and plurality of antenna elements enables the controller to control beamforming using the antenna elements. The network interface device 820 may also include a wired network interface.

The storage device 816 includes a computer-readable medium 822 on which is stored one or more sets of data structures and instructions 824 (e.g., software) embodying or utilized by any one or more of the methodologies or functions described herein. The instructions 824 may also reside, completely or at least partially, within the memory 804 and/or within the controller 802 during execution thereof by the communication apparatus 800.

While the computer-readable medium 822 is illustrated in an example embodiment to be a single medium, the term "computer-readable medium" may include a single medium or multiple media (e.g., a centralized or distributed database, and/or associated caches and servers) that store the one or more instructions 824.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, a system may include one or more processors and may be configured with instructions stored on a computer-readable storage device.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, a system may include one or more processors and may be configured with instructions stored on a computer-readable storage device.

The Abstract is provided with the understanding that it will not be used to limit or interpret the scope or meaning of the claims. The following claims are hereby incorporated into the detailed description, with each claim standing on its own as a separate embodiment.

## Claims

1. A method for mmWave beam detection and tracking, the method comprising:
receiving (601) a set of known reference signals from a base station, over a broadcast channel;
detecting (603) a plurality of downlink beams from the base station, each downlink beam comprising a respective reference signal comprising associated time offset information;
determining a favorable downlink beam of the plurality of downlink beams and decoding the time offset information embedded within the favorable downlink beam; and
transmitting (605) a random access preamble sequence to the base station in a time slot indicated by the time offset information of the favorable downlink beam;
wherein a transmit power for transmitting the random access preamble sequence is based on open-loop transmit power control that does not use feedback from the base station;
wherein, the method further comprises:
detecting feedback from the base station;
increasing the transmit power upon no feedback is detected from the base station and the same downlink beams are detected again; and
retransmitting the random access preamble sequence to the base station with the increased transmit power; or
wherein, the method further comprises:
detecting feedback from the base station;
retransmitting the random access preamble sequence at the initial transmit power level upon no feedback is detected from the base station and downlink beams which are different from the downlink beams are detected.

2. The method of claim 1, wherein the reference signals are encoded by an orthogonal sequence with a predetermined time and frequency resource.

3. The method of claim 1, wherein the set of known reference signals are different between the base station and adjacent base stations.

4. The method of claim 1, wherein the set of known reference signals is different between sectors of a cell generated by the base station.

5. The method of claim 1, further comprising monitoring, in an idle mode or a connected mode, the plurality of downlink beams from the base station or a second base station.

6. The method of claim 1, wherein the open-loop transmit power control initially sets the transmit power using measurements from signals from the base station.

7. A wireless communication apparatus comprising:
a radio coupled to a plurality of antenna elements; and
a controller coupled to the radio and antenna elements, wherein the controller is configured to:
receive a set of known reference signals from a base station, over a broadcast channel;
detect a plurality of downlink beams from the base station, each downlink beam comprising a respective reference signal comprising associated time offset information;
determine a favorable downlink beam of the plurality of downlink beams and decode the time offset information embedded within the favorable downlink beam; and
transmit a random access preamble sequence to the base station in a time slot indicated by the time offset information of the favorable downlink beam;
wherein a transmit power for transmitting the random access preamble sequence is based on open-loop transmit power control that does not use feedback from the base station;
wherein, the controller is further configured to:
detect feedback from the base station;
increase the transmit power upon no feedback is detected from the base station and the same downlink beams are detected again; and
retransmit the random access preamble sequence to the base station with the increased transmit power; or
wherein, the controller is further configured to:
detect feedback from the base station;
retransmit the random access preamble sequence at the initial transmit power level upon no feedback is detected from the base station and downlink beams which are different from the downlink beams are detected.

## Patentansprüche

1. Verfahren zum Erfassen und Verfolgen von mm-Wellenstrahlen, wobei das Verfahren umfasst:
Empfangen (601) eines Satzes bekannter Referenzsignale von einer Basisstation über einen Übertragungskanal;
Erfassen (603) einer Vielzahl von "Downlink"-Strahlen von der Basisstation, wobei jeder "Downlink"-Strahl ein entsprechendes Referenzsignal mit zugehöriger Zeitversatzinformation umfasst;
Bestimmen eines günstigen "Downlink"-Strahls aus der Vielzahl von "Downlink"-Strahlen und Dekodieren der in den günstigen "Downlink"-Strahl eingebetteten Zeitversatzinformation; und
Übertragen (605) einer Präambelsequenz mit wahlfreiem Zugriff an die Basisstation in einem Zeitfenster, das durch die Zeitversatzinformation des günstigen "Downlink"-Strahls angezeigt wird;
wobei eine Sendeleistung zum Übertragen der Präambelsequenz mit wahlfreiem Zugriff auf eine Sendeleistungssteuerung im offenen Regelkreis basiert, die keine Rückkopplung von der Basisstation verwendet;
wobei das Verfahren ferner umfasst:
Erfassen von Rückkopplungen von der Basisstation;
Erhöhen der Sendeleistung, wenn keine Rückkopplung von der Basisstation erfasst wird und dieselben "Downlink"-Strahlen wieder erfasst werden; und
erneutes Übertragen der Präambelsequenz mit wahlfreiem Zugriff an die Basisstation mit der erhöhten Sendeleistung; oder
wobei das Verfahren ferner umfasst:
Erfassen von Rückkopplungen von der Basisstation;
erneutes Übertragen der Präambelsequenz mit wahlfreiem Zugriff mit der anfänglichen Sendeleistung, wenn keine Rückkopplung von der Basisstation erkannt wird und "Downlink"-Strahlen, die sich von den "Downlink"-Strahlen unterscheiden, erkannt werden.

2. Verfahren nach Anspruch 1, wobei die Referenzsignale durch eine orthogonale Sequenz mit einer vorbestimmten Zeit- und Frequenzressource kodiert sind.

3. Verfahren nach Anspruch 1, wobei der Satz bekannter Referenzsignale zwischen der Basisstation und benachbarten Basisstationen unterschiedlich ist.

4. Verfahren nach Anspruch 1, wobei der Satz bekannter Referenzsignale zwischen den Sektoren einer von der Basisstation erzeugten Zelle unterschiedlich ist.

5. Verfahren nach Anspruch 1, ferner umfassend das Überwachen der Vielzahl von "Downlink"-Strahlen von der Basisstation oder einer zweiten Basisstation, in einem Leerlaufmodus oder einem verbundenen Modus.

6. Verfahren nach Anspruch 1, wobei die Sendeleistungssteuerung im offenen Regelkreis zunächst die Sendeleistung unter Verwendung von Messungen von Signalen der Basisstation einstellt.

7. Eine drahtlose Kommunikationsvorrichtung, umfassend:
ein Funkgerät, das mit einer Vielzahl von Antennenelementen gekoppelt ist; und
eine Steuerung, die mit den Funk- und Antennenelementen gekoppelt ist, wobei die Steuerung konfiguriert ist, zum:
Empfangen eines Satzes bekannter Referenzsignale von einer Basisstation über einen Übertragungskanal;
Erfassen einer Vielzahl von "Downlink"-Strahlen von der Basisstation, wobei jeder "Downlink"-Strahl ein entsprechendes Referenzsignal mit zugehöriger Zeitversatzinformation umfasst;
Bestimmen eines günstigen "Downlink"-Strahls aus der Vielzahl von "Downlink"-Strahlen und Dekodieren der in den günstigen "Downlink"-Strahl eingebetteten Zeitversatzinformation; und
Senden einer Präambelsequenz mit wahlfreiem Zugriff an die Basisstation in einem Zeitfenster, das durch die Zeitversatzinformation des günstigen "Downlink"-Strahls angezeigt wird;
wobei eine Sendeleistung zum Übertragen der Präambelsequenz mit wahlfreiem Zugriff auf eine Sendeleistungssteuerung im offenen Regelkreis basiert, die keine Rückkopplung von der Basisstation verwendet;
wobei die Steuerung ferner konfiguriert ist zum:
Erfassen von Rückkopplungen von der Basisstation;
Erhöhen der Sendeleistung, wenn keine Rückkopplung von der Basisstation erfasst wird und dieselben "Downlink"-Strahlen wieder erfasst werden; und
erneuten Senden der Präambelsequenz mit wahlfreiem Zugriff mit der erhöhten Sendeleistung an die Basisstation; oder
wobei die Steuerung ferner konfiguriert ist zum:
Erfassen von Rückkopplungen von der Basisstation;
erneuten Senden der Präambelsequenz mit wahlfreiem Zugriff auf dem anfänglichen Sendeleistungspegel, wenn keine Rückkopplung von der Basisstation erkannt wird und "Downlink"-Strahlen, die sich von den "Downlink"-Strahlen unterscheiden, erkannt werden.

## Revendications

1. Procédé pour une détection et un suivi de faisceau d'ondes millimétriques, le procédé consistant :
à recevoir (601) un ensemble de signaux de référence connus en provenance d'une station de base sur un canal de diffusion ;
à détecter (603) une pluralité de faisceaux de liaison descendante à partir de la station de base, chaque faisceau de liaison descendante comprenant un signal de référence respectif comportant des informations de décalage temporel associées ;
à déterminer un faisceau de liaison descendante favorable de la pluralité de faisceaux de liaison descendante et à décoder les informations de décalage temporel intégrées dans le faisceau de liaison descendante favorable ; et
à transmettre (605) une séquence de préambule d'accès aléatoire à la station de base pendant un intervalle de temps indiqué par les informations de décalage temporel du faisceau de liaison descendante favorable ;
dans lequel une puissance de transmission pour transmettre la séquence de préambule d'accès aléatoire est basée sur une commande de puissance de transmission en boucle ouverte qui n'utilise pas une rétroaction à partir de la station de base ;
le procédé consistant en outre :
à détecter une rétroaction à partir de la station de base ;
à augmenter la puissance de transmission lorsqu'aucune rétroaction n'est détectée à partir de la station de base et que les mêmes faisceaux de liaison descendante sont détectés à nouveau ; et
à retransmettre la séquence de préambule d'accès aléatoire à la station de base avec la puissance de transmission accrue ; ou
le procédé consistant en outre :
à détecter une rétroaction à partir de la station de base ;
à retransmettre la séquence de préambule d'accès aléatoire au niveau de puissance de transmission initial lorsqu'aucune rétroaction n'est détectée à partir de la station de base et que des faisceaux de liaison descendante qui sont différents des faisceaux de liaison descendante sont détectés.

2. Procédé selon la revendication 1, dans lequel les signaux de référence sont codés par une séquence orthogonale avec une ressource de temps et de fréquence prédéterminée.

3. Procédé selon la revendication 1, dans lequel l'ensemble de signaux de référence connus est différent entre la station de base et des stations de base adjacentes.

4. Procédé selon la revendication 1, dans lequel l'ensemble de signaux de référence connus est différent entre des secteurs d'une cellule générée par la station de base.

5. Procédé selon la revendication 1, consistant en outre à surveiller, dans un mode de repos ou un mode connecté, la pluralité de faisceaux de liaison descendante à partir de la station de base ou d'une seconde station de base.

6. Procédé selon la revendication 1, dans lequel la commande de puissance de transmission en boucle ouverte définit au départ la puissance de transmission à l'aide de mesures de signaux provenant de la station de base.

7. Appareil de communication sans fil comprenant :
une radio couplée à une pluralité d'éléments d'antenne ; et
un dispositif de commande couplé à la radio et à des éléments d'antenne, dans lequel le dispositif de commande est configuré :
pour recevoir un ensemble de signaux de référence connus en provenance d'une station de base sur un canal de diffusion ;
pour détecter une pluralité de faisceaux de liaison descendante à partir de la station de base, chaque faisceau de liaison descendante comprenant un signal de référence respectif comportant des informations de décalage temporel associées ;
pour déterminer un faisceau de liaison descendante favorable de la pluralité de faisceaux de liaison descendante et pour décoder les informations de décalage temporel intégrées dans le faisceau de liaison descendante favorable ; et
pour transmettre une séquence de préambule d'accès aléatoire à la station de base pendant un intervalle de temps indiqué par les informations de décalage temporel du faisceau de liaison descendante favorable ;
dans lequel une puissance de transmission pour transmettre la séquence de préambule d'accès aléatoire est basée sur une commande de puissance de transmission en boucle ouverte qui n'utilise pas une rétroaction à partir de la station de base ;
dans lequel le dispositif de commande est en outre configuré :
pour détecter une rétroaction à partir de la station de base ;
pour augmenter la puissance de transmission lorsqu'aucune rétroaction n'est détectée à partir de la station de base et que les mêmes faisceaux de liaison descendante sont détectés à nouveau ; et
pour retransmettre la séquence de préambule d'accès aléatoire à la station de base avec la puissance de transmission accrue ; ou
dans lequel le dispositif de commande est en outre configuré :
pour détecter une rétroaction à partir de la station de base ;
pour retransmettre la séquence de préambule d'accès aléatoire au niveau de puissance de transmission initial lorsqu'aucune rétroaction n'est détectée à partir de la station de base et que des faisceaux de liaison descendante qui sont différents des faisceaux de liaison descendante sont détectés.
